# EUROPÄISCHE PATENTSCHRIFT

(11) **EP 0 955 235 B1**
(45) Veröffentlichungstag und Bekanntmachung des Hinweises auf die Patenterteilung: **15.02.2006**
(21) Anmeldenummer: 99107695.1
(22) Anmeldetag: 17.04.1999
(51) Int. Cl.: B64C 21/06

(54) **Anordnung zur Grenzschichtabsaugung für ein Flugzeug**
Boundary layer suction device for aircraft
Dispositif d'aspiration de la couche limite pour aéronef

(30) Priorität: 06.05.1998 DE 19820097
(43) Veröffentlichungstag der Anmeldung: 10.11.1999
(73) Patentinhaber: Airbus Deutschland GmbH, 21129 Hamburg (DE)
(72) Erfinder: Pfennig, Jürgen, Dipl.-Ing., 27327 Marfeld (DE); Meister, Jürgen, Dipl.-Ing., 21614 Buxtehude (DE)
(74) Vertreter: Hansmann, Dierk

(56) Entgegenhaltungen:
- EP-A- 0 564 662
- DE-A- 19 720 069
- US-A- 3 317 162
- US-A- 3 801 048

## Beschreibung

Die Erfindung bezieht sich auf eine Anordnung zur Grenzschichtabsaugung an den strömungskritischen Stellen der Außenhaut eines Flugzeuges gemäß dem Anspruch 1. Eine oberbegriffsgemäße anordnung zur Grengschtabsaugung und Stoßgrengschichtkontrolle ist durch die EP-A1-0564662 bekannt.

Eine bekannte Vorgehensweise zur Reduzierung aerodynamischer Reibungswiderstände wird durch die Absaugung der aerodynamische Flächen umgebende Grenzschicht erreicht, wofür dem Fachmann einschlägige Lösungen geläufig sind.

Aus der DE-AS 1 280 057 ist es bekannt, daß man zur Absaugung eines Flugzeugtragflügels entsprechende Saugleitungen an eine Saugquelle im Inneren des Flugzeuges anschließt, wobei der Druckschrift keine näheren Angaben zur Funktion der Saugquelle zu entnehmen sind. Der genannten Druckschrift kann man auch nirgends ein Hinweis entnehmen, wonach man an anderer Stelle eines Flugzeuges diverse Saugquellen vorsehen könnte, mit denen man eine wirtschaftliche Grenzschichtabsaugung unter Ausnutzung der traditionell gebundenen Energieressourcen eines Flugzeuges gewährleisten würde.

Ferner wird in der DE 197 20 069 A1 ein Bypass-Triebwerk vorgestellt, bei dem in der Wandung des oberen Gehäusebereiches eine Kammer integriert ist. Innerhalb diesem Abschnitt sind der Außen- und die Innenwandung durchgehende Öffnungen eingearbeitet, durch die in den Pypass-Kanal des Triebwerkes eine Luftmenge (an Grenzschicht oberhalb des Triebwerkgehäuses) abgesaugt wird. Dabei wird durch den Überschall-Bypass-Strahl, der infolge der Saugwirkung des Triebwerk-Gebläses (fan) den Bypass-Kanal passiert, am (sogenannten) FAN-Austritt eine EjektorWirkung erreicht, wodurch ein Unterschall-Ejektor-Strahl der über die Kammeröffnungen in den Bypass-Kanal ansaugten Luftmenge (der Grenzschicht) einsetzt, der gemeinsam mit dem Bypass-Strahl am Fan-Austritt ausgeblasen wird. Nach dieser Lösung wird der Unterschall-Ejektor-Strahl den Überschall-Bypass-Strahl umhüllen, wodurch man sich eine Reduzierung des Strahllärmes des Triebwerkes verspricht.

Man kann aber davon ausgehen, daß kein Vorbild dafür bekannt ist, eine Saugquelle bereitzustellen, die eine wirtschaftliche Grenzschichtabsaugung mit den als Treibstrahl umgesetzten Luftmassen innerhalb eines (großen) luftatmenden Triebwerkes realisiert.

Auch die vorgenannte DE 197 20 069 A1 gibt darüber keine Auskunft, da sich die dort vorgeschlagene Lösung allein auf die Absaugung einer in umittelbarer Umgebung der Gehäuseoberfläche eines Triebwerkes strömenden Grenzschicht festlegt, also sich definitiv auf eine abzusaugende Oberfläche mit geringerer effektiver Saugfläche bezieht. Ihre Verwendung zur Stoßgrenzschichtkontrolle unter gleichzeitiger Berücksichtigung einer notwendigen Steigerung der aufzubringenden Saugleistung infolge mehrerer der Saugquelle anzuschließender und lokal verteilter abzusaugender aerodynamischer Flächen scheint fragwürdig.

Den genannten Druckschriften ist auch nirgends ein Hinweis zu entnehmen, der dazu führen könnte, eine Installation der Verbindungsleitung(en) für das Absaugesystem (eines Großraumflugzeuges) vorzusehen, mit dem man über nur kurze Entfernungen (von den unterhalb der abzusaugenden aerodynamischen Flächen gelegenen Absaugekammern bis zu einem großen Triebwerk) überbrückt.

Demzufolge liegt der Erfindung die Aufgabe zugrunde, eine gattungsgemäße Anordnung derart zu gestalten, daß mit ihr eine wirtschaftliche Grenzschichtabsaugung unter Ausnutzung der traditionell gebundenen Energieressorcen eines luftatmenden Triebwerkes und / oder gleichermaßen eine Stoßgrenzschichtkontrolle für ein Flugzeug gewährleistet wird. Die Anordnung soll für die Grenzschichtabsaugung von aerodynamischen Flächen mit auch größerer effektiver Saugfläche unter Berücksichtigung der zu erwartenden Steigerung aufzubringender Saugleistung geeignet sein, wobei sie nahezu wartungsfrei und ausfallsicher arbeiten soll.

Diese Aufgabe wird durch die im Anspruch 1 angegebenen Maßnahmen gelöst. In den weiteren Ansprüchen sind zweckmäßige Ausgestaltungen dieser Maßnahmen angegeben.

Die Erfindung ist in einem Ausführungsbeispiel anhand der Zeichnungen näher beschrieben.
Es zeigen
- Fig. 1: ein Bypass-Triebwerk - in Längsschnittdarstellung - mit im offenen Bereich angeordneten Strahlpumpen;
- Fig. 1.1: das Triebwerk nach Fig. 1 mit Bereichsangabe für eine (in Fig. 12 gezeigte) Detaildarstellung D;
- Fig. 1.2: die Detaildarstellung D des Bypass-Triebwerkes nach Fig. 11;
- Fig. 2a bis 2f: die - in einer Querschnittsdarstellung angegebenen - vorbestimmte(n) Position(en) der lokal unterschiedlich angeordneten Ejektorpumpe(n) im offenen Bereich (Bypass-Kanal und Hauptstromkanal);
- Fig. 3: die - in Längsschnittdarstellung gezeigte - Ausführung der Strahlpumpe nach dem Detail C1 der Fig. 1;
- Fig. 4: die - in Längsschnittdarstellung gezeigte - Ausführung der Strahlpumpe nach dem Detail C2 der Fig. 1;
- Fig. 5: das am Flügel eines Flugzeuges befestigte Bypass-Triebwerk, das über (mindestens) eine Saugleitungsverbindung mit dem Saugbereich des Flügels verbunden ist.

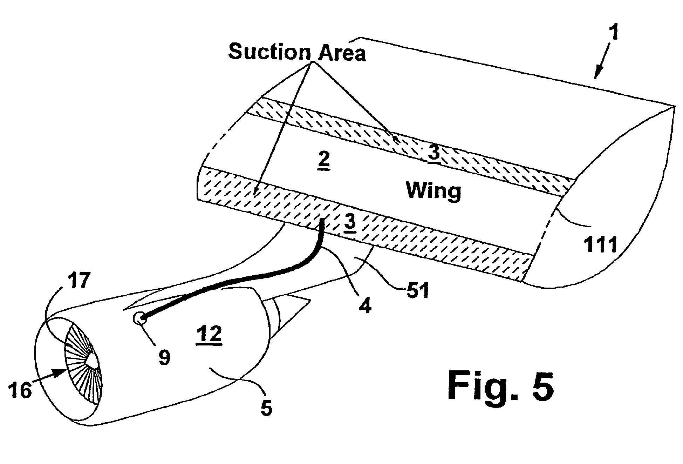

Um den notwendigen Unterdruck, welcher für die Grenzschichtabsaugung der strömungskritischen Stellen oberhalb der perforierten Außenhaut 2 einer (allgemein betrachteten) Flugzeugstruktur 1 eines Flugzeuges erforderlich ist, zu erzeugen, wird eine (den tatsächlichen Erfordernissen angepaßte) Anzahl von Strahlpumpen 7 (Jet-Pumpen) in ein (allgemein betrachtetes) luftatmendes Triebwerk 5 eingebaut. Der genaue Einbauort richtet sich nach dem Aufbau des Triebwerkes 5 und nach der günstigsten Position für eine (Saug-)Leitungsverbindung 4, die den absaugbaren Flächen 3 (suction areas) und der (den) Strahlpumpe(n) 7 angeschlossen ist. In der Fig. 5, auf die später näher eingegangen wird, ist dazu eine Darstellung der Anordnung zur Grenzschichtabsaugung und Stoßgrenzschichtkontrolle für ein Flugzeug mit dem am Flügel 11 des Flugzeuges befestigtem Triebwerk 5, das über die genannte (Saug-)Leitungsverbindung 4 mit dem (den) der Außenhaut 2 integrierten Saugbereich(en) 3 des Flügels 11 verbunden ist, gezeigt. Dabei ist das Triebwerk 5 an einem Pylon 51 befestigt, das an der unteren Struktur des Flügels 11 fest aufgehangen ist. Im Praxisfall kann man und - auf die beispielhafte Ausführung der nämlichen Anordnung bezogen - wird man anstelle des (allgemein betrachteten) luftatmenden Triebwerkes 5 ein Bypass-Triebwerk einsetzen, weshalb im weiteren die Bezeichnung: "Bypass-Triebwerk" für das in allen Figuren betrachtete Triebwerk 5 verwendet wird.

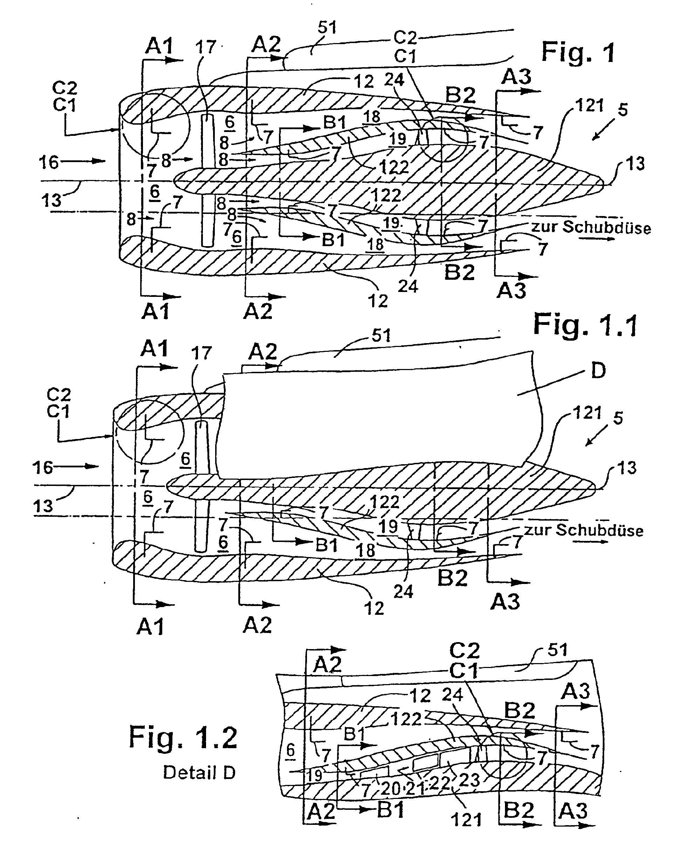

Aus dem Längsschnitt eines in der Fig. 1 dargestellten Bypass-Triebwerkes kann man den (für die weitere Beschreibung der Anordnung zur Grenzschichtabsaugung und zur Stoßgrenzschichtkontrolle benötigten) prinzipiellen Triebwerk-Aufbau ersehen. Dieser Aufbau beschränkt sich auf die Darstellung eines Triebwerkgehäuses 12, eines - entlang der Mittelachse 13 (des Triebwerkes 5) angeordneten - Wellenbereiches 121 mit anschließendem Abgaskegelbereich [genauer: Welle zur (näher in Fig. 12 gezeigten) Turbinen-Baugruppe 23 mit anschließender Abgaskegel-Darstellung], eines am vorderen Abschnitt des Wellenbereiches 121 befestigten Triebwerkgebläses 17 (fan) und eines Mantels 122, der im Inneren des Triebwerkes 5 dem Triebwerkgehäuse 12 und dem Wellenbereich 121 zwischenlagert. Ein - nicht den vollständigen offen Querschnitt des Triebwerkes 5 (aus)füllender - Abstandhalter 24 (das heißt: eine auf geeignete Art und Weise triebwerksintern befestigte Stütze) hält den Mantel 122 gegenüber dem Wellenbereich 121 auf Distanz, wodurch der Mantel 122 gegenüber der inneren Oberfläche des Triebwerkgehäuses 12 ebenso beabstandet ist. Auf diese Elemente-Anordnung werden die weiteren Ausführungen sich fortlaufend beziehen.

Durch die (vorgeschilderte) übliche Elemente-Anordnung für ein Bypass-Triebwerk schließen das Triebwerkgehäuse 12 und der Mantel 122 einen Bypass-Kanal 18 (Nebenstromkanal) und außerdem der Mantel 122 und der Wellenbereich 121 einen Hauptstromkanal 19 (Heißgaskanal) ein, die beide offene Teilbereiche (des gesamten offenen Bereiches innerhalb des Bypass-Triebwerkes) sind und sich in Richtung der Mittelachse 13 des Bypass-Triebwerkes erstrecken. Dadurch wird die vom Triebwerkgebläse 17 am Triebwerk-Lufteinlaß 16 in den offenen Querschnitt 6 (in das Triebwerk-Innere) angesaugten (kalte) Luft durch den Mantel 122 in die beiden Kanäle aufgeteilt. Dabei durchströmt den Hauptstromkanal 19 ein als "primary flow" bezeichneter und den Bypass-Kanal 18 ein als "secondary flow" bezeichneter (Teil des) Treibstrahles 8, die beide ausgangs der Kanäle (ohne nähere Betrachtung der physikalischen Vorgänge) zu einer (nicht gezeigten) Schubdüse strömen und von dort aus das Triebwerk 5 verlassen.

Im offenen Querschnitt 6 des (figürlich betrachteten) Bypass-Triebwerkes sind mehrere StrahlPumpen 7 (allgemein: ist wenigstens eine Strahl-Pumpe 7) an vorbestimmten Einbauorten angeordnet, die durch einen im Bypass-Triebwerk umgesetzten Treibstrahl 8 (driving jet) der Luft angetrieben werden. Grundsätzlich sind folgende Einbauorte im offenen Querschnitt 6 des Bypass-Triebwerkes denkbar, die sich an den Stellen der gelegten Schnitte: A1 - A1, A2 - A2, A3 - A3, B1 - B1, B2 - B2 befinden.

Aus der Fig. 1 kann man ersehen, daß die Schnittstelle A1 - A1 den offenen Bereich 6 im Triebwerk-Lufteinlaß 16, der dem Triebwerkgebläse 17 vorgelagert ist, umfaßt. Die Schnittstelle A2 - A2 umfaßt den offenen Bereich, der dem Triebwerkgebläse 17 nachgeordnet ist und den Anfangsbereich des Bypass-Kanals 18 betrifft, wogegen die Schnittstelle A3 - A3 mit den offenen Bereich umfaßt, der den Ausgangsbereich des Bypass-Kanals 18 betrifft. Die Schnittstelle B1 - B1 umfaßt den offenen Bereich, der dem Triebwerkgebläse 17 nachgeordnet ist und den Anfangsbereich des Hauptstrom-Kanals 19 [des Eintritukanales zur - in der Fig. 12 gezeigten - Verdichter-Baugruppe 20] betrifft, wogegen die Schnittstelle B2 - B2 den offenen Bereich umfaßt, der den Ausgangsbereich des Hauptstromkanals 19 (am - in der Fig. 12 dem Abstandhalter 24 folgenden - Coreaustritt] betrifft.

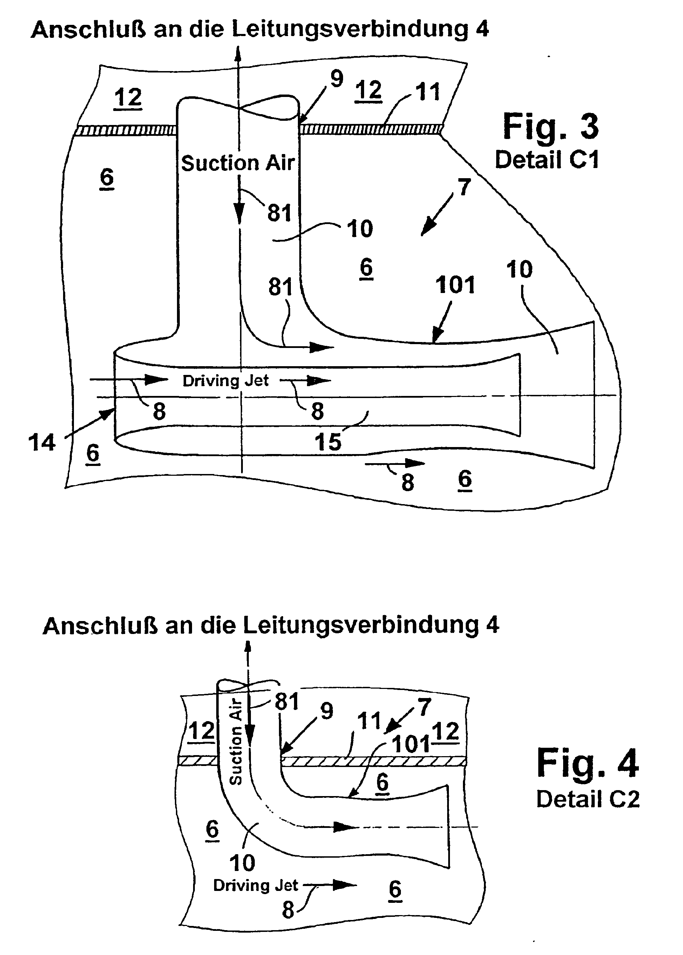

Die Luft wird am Triebwerk-Lufreinlaß 16 (Triebwerkseinlauf) mit dem genannten Triebwerkgebläse 17 (fan) in den offenen Bereich des Triebwerkes 5 angesaugt, die infolge der Saugwirkung (des Triebwerkgebläses 17) mit dem Treibstrahl 8 der einsetzenden Saugströmung alle offenen Querschnitte 6 (alle offenen Zonen) des Triebwerkes 5 durchwandert. Ein Vorbild dafür geben die (in der Fig. 1 besonders hervorgehoben) Abschnitte für die Detailbereiche C1 und C2, die in den Figuren 3 und 4 mit der angedeuteten Strömungsrichtung des (betreffenden) Treibstrahles 8 detailierter dargestellt sind.

Die Strahlpumpen 7 werden -im wirklichen Anwendungsfall - (in Abhängigkeit der abzusaugenden Luftmenge an Grenzschicht) im offenen Querschnitt 6 des Triebwerkes 5 an den - in der Fig. 1 angegebenen - (vorbestimmten) Stellen angeordnet. Deren genauer Einbauort richtet sich nach dem (tatsächlichen) Aufbau des Triebwerkes 5 und nach der günstigsten Position für die anzuschließende(n) (Saug-)Leitungsverbindung(en) 4 an die betreffende Strahlpumpe 7, auf deren (konstruktive) Ausführung hinsichtlich der Figuren 3 und 4 später eingegangen wird. Die Anzahl der Strahlpumpen 7 wird durch die insgesamt außerhalb der Außenhaut 2 der (beispielgewählten) Tragfläche 111 (des Flügels) abzusaugende Luftmenge bestimmt, die sich in Korrelation mit der aus mehreren absaugbaren Flächen 3 gebildeten effektiven Gesamtabsaugfläche befindet.

Unter Bezugnahme auf die Fig. 1 wird in diese Abbildung ein Bereichsangabe integriert, die in der Fig. 11 einen Detailbereich D abgrenzt, der in der Fig. 12 die (beispielbezogene) Detaildarstellung des Triebwerkes 5 (des Bypass-Triebwerkes) nach der Fig. 1 offenbart.

Diese Detaildarstellung D wurde zum besseren Verständnis für die Anordnung wichtiger funktioneller Elemente bzw. funktionaler Bereiche innerhalb des Hauptstromkanals 19 eingeführt. Danach sind im offenen Querschnitt des Hauptstromkanals 19 eine (dem offenen Bereich an der Schnittstelle B1 - B1) folgende Verdichtet-Baugruppe 20, ein Diffuser-Raum 21, eine Brennkammer 22 und eine Turbinen-Baugruppe 23 angeordnet, die - in dieser gewählten Reihenfolge - in Richtung des Ausgangsbereiches des Hauptstromkanals 19 in diesem Kanal liegen. Zwischen diesen funktionswichtigen Elementen bzw. Baugruppen des Triebwerkes 5 verbleibt in Längsrichtung der Mittelachse 13 (das heißt: zwischen ihnen und der inneren Oberfläche des Triebwerkgehäuses 12 bzw. der Oberfläche des Wellenbereiches 121) ein offener Bereich, durch den der betreffende Treibstrahl 8 (primary flow) der Schubdüse zuströmt.

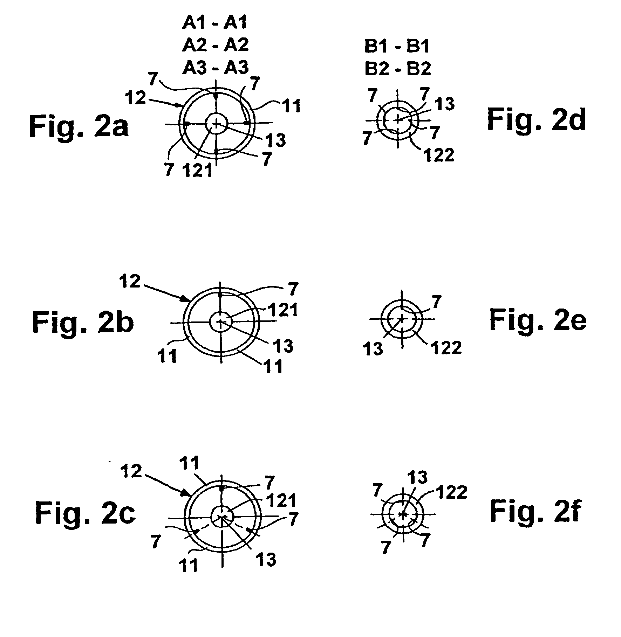

In den Figuren 2a, 2b, 2c, 2d, 2e und 2f wird die definitive Anordnung der Strahlpumpe(n) 7 im offenen Querschnitt 6 an den vorbestimmten Stellen nach (insbesondere) der Fig. 1 gezeigt. Davon betroffen sind die offenen Querschnittsbereiche an den vorgenannten Schnittstellen.

An dieser Stelle wird vorsorglich - und ungeachtet der nachfolgenden beschriebenen charakteristischen Anordnungen der Strahlpumpe(n) 7 - allgemein darauf hingewiesen, daß der Einbau der Strahlpumpe(n) 7 grundsätzlich an jeder Stelle des Umfangs und an jedem Schnitt bzw. auf jeder Triebwerks-Ebene erfolgen kann.

Im weiteren kann man aus den Figuren 2a, 2b, 2c die definitive Lage der Strahlpumpe(n) 7 und deren Fixierung an der inneren Oberfläche der Wandung 11 des Triebwerkgehäuses 12 ersehen, die man an den Schnittstellen A1 - A1, A2 - A2 und A3 - A3 gleichermaßen antrifft. Nach der Fig. 2a werden vier am kreisförmigen Umfang der inneren Oberfläche der Wandung 11 verteilte und zueinander gleichmäßig beabstandete Strahlpumpen 7 angeordnet, wobei sich immer zwei (in horizontaler und vertikaler Richtung angeordnete) Strahlpumpen 7 paarweise gegenüber befinden. Nach der Fig. 2b wird nur eine Strahlpumpe 7 eingesetzt, die im (in vertikaler Richtung angeordneten) oberen Bereich am kreisförmigen Umfang der inneren Oberfläche der Wandung 11 (allein) fixiert ist. Nach der Fig. 2c sind (ähnlich dem Vorbild nach der Fig. 2a) drei am kreisförmigen Umfang der inneren Oberfläche der Wandung 11 und zueinander gleichmäßig beabstandete Strahlpumpen 7 fixiert, die gemäß dem figurlichen Querschnittsbild dermaßen zueinander beabstandet sind, wonach die Strahlpumpen 7 zueinander den Seitenabstand eines gleichmäßigen Dreiecks einnehmen bzw. (dann) an der Stelle des betreffenden Dreieck-Endpunktes fixiert sind.

Dabei ist eine (von drei) Strahlpumpe(n) 7 an der nach Fig. 2b bezeichneten Stelle fixiert, wobei zwei Strahlpumpen 7 sich - gleichermaßen dem Vorbild nach der Fig. 2a - in horizontaler Richtung paarweise gegenüberstehen.

Ferner kann man aus den Figuren 2d, 2e, 2f die definitive Lage der Strahlpumpe(n) 7 und deren Fixierung an der (dem Wellenbereich 121 zugewandten) inneren Oberfläche des Mantels 122 ersehen, die man an den Schnittstellen B1 - B1 und B2 - B2 gleichermaßen antrifft. Danach werden (wird) am kreisförmigen Umfang der inneren Oberfläche des Mantels 122 nach der Fig. 2d vier umfänglich verteilte und zueinander gleichmäßig beabstandete Strahlpumpen 7, nach der Fig. 2e nur eine Strahlpumpe 7 und nach der Fig. 2f drei umfänglich verteilte und zueinander gleichmäßig beabstandete Strahlpumpen 7 angeordnet. Die.Anordnung der Strahlpumpe(n) 7 soll gleichermaßen nach den Vorbildern der Figuren 2a, 2b, 2c geschehen.

Nachdem sich die vorangestellten Ausführungen auf den (vorbestimmten) Einbauort der Strahlpumpe(n) 7, der den offenen Querschnitt 6 des (Bypass-)Triebwerkes 5 quer zu dessen Mittelachse 13 umfaßt, im Bypass-Triebwerb beschränkten, wird nachfolgend auf die Installation und Funktion der Strahlpumpen 7 näher eingegangen. Dazu werden - wie aus der Fig. 1 ersichtlich - zwei (vorbestimmte) Abschnitte der Strahlpumpen-Installation auserwählt, die mit den Detail-Darstellungen (genauer: Detail C1 und Detail C2) an den Schnittstellen A1 - A1 und B2 - B2 korrelieren, welche die Figuren 3 und 4 abbilden. Diese Figuren bilden jeweils ein (im Endzustand) installierte Strahlpumpe 7 ab, wie sie dem offenen Querschnitt (einmal) nahe dem Triebwerkseinlauf oder (anderenfalls) nahe dem Ausgang des Heißgaskanals des Bypass-Triebwerks installiert sind.

Im weiteren werden zwei Ausführungen der Strahlpumpe 7 vorgestellt. In der Fig. 3 wird der Abschnitt, der eine erste Ausführung der Strahlpumpe 7 betrifft, mit dem Detail C1 abgebildet. Danach besteht die Strahlpumpe 7 aus einer als Saugrohr ausgebildeten Saugleitung 10. Bei der Saugleitung 10 handelt es sich weitestgehend um ein frei gebogenes (Rohr-)Biegeteil, das nach der Fig. 3 rechtwinklig gebogen ist. Ein erster abgewinkelter Rohrabschnitt des Biegeteiles wird (beispielsweise an der Schnittstelle A1 - A1) endseitig durch die Wandung 11 des Triebwerkgehäuses 12 geführt bzw. wird in das Triebwerkgehäuse 12 eingelassen.

Dabei wird der Rohrabschnitt durch eine (dem Triebwerkgehäuse 11 ausgenommenen) Gehäuseöffnung 9 geführt (fest eingepaßt), wobei der Außenbereich der Rohrwandung (im Lochquerschnitt) fest und dicht mit der Wandung des Triebwerkgehäuses 11 verbunden ist. Diesem ersten Rohrabschnitt des Biegeteiles ist die (als Rohrleitung ausgeführte) Leitungsverbindung 4 angeschlossen, welche mit geeigneten Maßnahmen dem Anschluß installiert wird.

Der zweite verbleibende (nicht befestigte) Rohrabschnitt dieses (Rohr-)Biegeteiles steht (allgemein) gegenüber dem ersten Rohrabschnitt in einem Winkel, so daß er (nach der Fig. 3) parallel zur Strömungsrichtung des Strömungskanals liegt, wobei das freie Ende (der Endbereich 101) dieses Rohr-Abschnittes in den offenen Querschnitt 6 mündet.

In fiktiver Verlängerung einer dem zweiten Rohr-Abschnitt zuordbaren Rohrachse befindet sich an der Durchtrittsstelle der Wandung der Saugleitung 10 eine ihr eingelassene Öffnung 14. Dieser Öffnung 14 ist ein (sogenanntes) Treibstrohlrohr 15, das im (offenen) (Rohr-)Querschnitt der Saugleitung 10 (freitragend) angeordnet ist und dessen Rohrachse (genau) auf der (vorgenannten) fiktiv verlängerten Rohrachse des zweiten Rohr-Abschnittes liegt, fest und dicht angeschlossen. Dabei kann das Treibstrahlrohr 15 der nämliche Öffnung 14 (beispielsweise) fest eingepaßt werden, dermaßen, daß der Außenbereich der Wandung des Treibstrahlrohres 15 (im Lochquerschnitt der Öffnung 14) straff sitzt und gleichzeitig fest und dicht mit der Wandung der Saugleitung 10 verbunden ist. Das in gerader Richtung verlaufendes Treibstrahlrohr 15, das parallel der Strömungsrichtung des Strömungskanals liegt, wird durch den offenen Querschnitt des zweiten Rohr-Abschnittes geführt und mündet mit seinem freien Ende dem Endbereich 101 der Saugleitung 10 ein.

Mit dieser ersten Ausführung der Strahlpumpe 7 wird erreicht (bezweckt), das der im Triebwerk 5 - infolge der Saugwirkung des Triebwerkgebläses 17 - umgesetzte Treibstrahl 8 (mit wenigstens einer Teilmenge der umgesetzten Treibstrahl-Strömung) an der vorgenannten Öffnung 14 in das Treibstrahlrohr 15 eintritt und es querschnittsmäßig durchströmt. Danach wird am Ausgang (am freien Ende) des Treibstrahlrohres 15 die kinetische Energie des austretenden Treibstrahles 8 [der austretenden Treibstrahl(teil)menge] dermaßen umgesetzt, daß in der Saugleitung 10 ein Unterdruck erzeugt wird, infolge dessen eine Saugwirkung einsetzt.

Weil dem ersten Rohrabschnitt des Biegeteiles (bzw. der Saugleitung 10) - wie vorbeschrieben - die [mit wenigstens einer absaugbaren Fläche 3 der Tragfläche 11 (wing) verbundene] Leitungsverbindung 4 angeschlossen ist, wird (durch den Saugeffekt) eine Luftströmung (der oberhalb der Tragfläche 111 abgesaugten Saugluft 81 der Grenzschicht) durch die Leitungsverbindung 4 einsetzen. Der durch das Treibstrahlrohr 15 zwangsgeführte und in den offenen Querschnitt 6 des Endbereiches 101 (der Saugleitung 10) geleitete Treibstrahl 8 zieht - aufgrund seiner kinetischen Energie - die Saugluft 81 in den offenen Querschnitt 6 des Endbereiches 101 des Absaugrohres, die danach weiter durch offene Bereiche des Triebwerk-Inneren strömt und das Triebwerk 5 später verläßt.

In der Fig. 4 wird der Abschnitt, der eine zweite Ausführung der Strahlpumpe 7 betrifft, mit dem Detail C2 abgebildet. Die Unterschiede dieser Ausführungsform im Vergleich der vorbeschriebenen Strahlpumpen-Ausführung bestehen darin, daß das Treibstrahlrohr 15, welches bei der Ausführung der Strahlpumpe 7 nach der Fig. 3 (dem Detail C1) beachtet wird, gänzlich wegtällt.

Die Installation der Saugleitung 10 [mit dem winklig ausgeführten (Rohr-)Biegeteil] entspricht den vorbeschriebenen Ausführungen. Mit der zweiten Ausführung der Strahlpumpe wird erreicht (bezweckt), daß der außerhalb dem zweiten Rohrabschnitt des Biegeteiles entlang strömende und am Ausgang der Saugleitung 10 vorbei strömende Treibstrahl 8 durch seine kinetische Energie gleichfalls in der Saugleitung 10 einen Unterdruck erzeugt, wodurch - wie vorbeschrieben - eine Luftströmung (der oberhalb der Tragfläche 111 (wing) abgesaugten Saugluft 81 durch die Leitungsverbindung 4 (infolge der Saugwirkung) einsetzt.

Der triebwerksintern umgesetzte Treibstrahl 8 sorgt demnach auf verschiedene Weise für den Unterdruck in der Saugleitung 10 beider Strahlpumpen-Ausführungen. Während er bei der ersten Ausführung der Strahlpumpe 7 (nach dem in der Fig. 3 abgebildeten Details C) nur als den Rohrquerschnitt des Strahlrohres 15 durchströmende Teilmenge dessen Ausgang verläßt und mit seiner kinetischen Energie (am Austrittsende des Strahlrohres 15) in der Saugleitung 10 den Unterdruck zum Absaugen erforderlichen Unterdruck erzeugt - umströmt der im offenen Querschnitt 6 (bzw. im Bypass-Kanal 18 oder Hauptstromkanal 19) fließende Massenstrom des Treibstrahles 8 bei der zweiten Ausführung der Strahlpumpe 7 (nach dem in Fig. 4 abgebildeten Detail C2) den zweiten Rohrabschnitt des Biegeteils und erzeugt auf gleiche Weise in der Saugleitung 10 (ohne integrietem Treibstrahlrohr 15) den zum Absaugen erforderlichen Unterdruck.

Die vorgestellten Ausführungen der Strahlpumpe 7 (gemäß dem Abbild der Detaile C1 und C2) werden auf ähnliche Art und Weise innerhalb des Hauptstromkanals 19 an den vorbestimmten Stellen (des nach Fig. 1 gelegten Schnittes B1 - B1 und B2 - B2) installiert, wobei dann der erste Rohrabschnitt des Biegeteiles endseitig durch die Wandung des Mantels 122 geführt bzw. in den Mantel 122 eingelassen ist.

Wie bereits einführend der Beschreibung des Ausführungsbeispiels mit Bezugnahme auf die Fig. 5 angeben, wird zu dieser Abbildung (nach Fig. 5) folgendes ergänzt. Die gezeigte Leitungsverbindung 4 wird im Anwendungsfall keinesfalls oberhalb der Außenhautbereiche (aerodynamischer Flächen) des Flugzeuges verlegt werden. Man kann davon ausgehen, daß die Installation dieser Leitungsverbindung 4 innerhalb der Flugzeugstruktur geschehen wird, um - während des Flugbetriebes - aeraodynamische Nachteile auszuschließen. Diese oberhalb dem Triebwerk 5 und oberhalb dem Pylon 51 bis an einen (der beiden) Absaugbereich(e) 3 der Tragfläche 111 (wing) dargestellte Leitungsführung wurde - nur zum besseren Verständnis - derart gewählt. Davon betroffen ist auch die Gehäuseöffnung 9, die - nach dieser Darstellung - dem Triebwerkgehäuse 11 ausgenommen ist. Bei einer Verlegung der Leitungsverbindung 4 innerhalb der Flugzeugstrukiur wird sie wahrscheinlich im Triebwerkgehäuse 12, möglicherweise auf der (in den Figuren 3 und 4 dargestellten) Wandung 11, integriert sein.
Dem wäre zu ergänzen, daß - bei geschickter Innenverlegung der (wenigstens einem Triebwerk 5 angeschlossenen) Leitungsverbindung 4 - alle strömungskritischen Stellen des Flugzeuges erreicht werden könne. Deshalb wird es als zweckmäßig erachtet, diese Leitungsverbindung 4 mit einer (Rohr-)Leitungsverzweigung zu verbinden, die (innerhalb, keinesfalls außerhalb) der Flugzeugstruktur integriert wird. Beispielbezogen wäre eine Positionierung im Triebwerkgehäuses 12 auf der nämlichen Wandung 11 denkbar, weil bei entsprechender Anzahl an triebwerksintern installierten Strahlpumpen 7 die ihnen angeschlossenen (weiteren) Leitungsverbindungen an dieser Leitungsverzweigung zweckmäßigerweise zusammengeführt werden, um über eine entsprechend dimensionierte einzelne Leitungsverbindung 4 die Grenzschicht (an der vorgesehenen strömungskritischen Stelle) abzusaugen. Gleichermaßen kann man die Zusammenführung weiterer (nicht gezeigter) Leitungsverbindungen 4, die den verschiedensten (der Außenhaut des Flugzeuges integrierten) Saugbereichen angeschlossen sind, an einer weiteren derartigen (Rohr-)Leitungsverzweigung realisieren, von der aus eine ihr angeschlossene einzelne Leitungsverbindung 4 die Verbindung zu einer in Triebwerknähe (des einzelnen Triebwerkes 5) befindlichen (Rohr-)Leitungsverzweigung umsetzt.

Abschließend läßt sich folgendes resümieren. Nach den vorgeschilderten Ausführungen besteht die Möglichkeit, entsprechend den tatsächlichen Erfordernissen ein Bypass-Triebwerk grundsätzlich mit beiden Ausführungen der Strahlpumpen 7 auszurüsten. Zum einen kann eine Strahlpumpe 7 (eine sogenannte "Inner Driving Jet") eingesetzt werden, bei welcher - nach der Fig. 3 - der Treibstrahl 8 durch die Saugleitung 10 geführt wird. Besonderes Augenmerk muß in diesem Fall dem Einlauf des Treibstrahlrohres 15 gewidmet werden, um die Stoßverluste möglichst gering zu halten. Zum anderen kann eine entsprechend geformte Saugleitung 10 (bzw. Saugrohr) direkt in den Triebwerk-Luftstrom eingebracht werden, die man - nach der Fig. 4 - als Strahlpumpe 7 (als sogenannte "Outer Driving Jet") einsetzt. Dabei wirkt der Luftmassenstrom im Bypass-Triebwerk als Treibstrahl 8, welcher die abzusaugende Grenzschicht-Luft aus der Saugleitung 10 mitreißt. Bei dieser sehr einfachen Konstruktion wäre auf eine exakte aerodynamische Gestaltung des Rohres zu achten, da im Bypass- oder im Corekanalsegment des nämlichen Triebwerkes 5 unter anderem starke Luftwirbel zu erwarten sind.

Man kann aber davon ausgehen, daß mit einer triebwerksinternen Installation von Strahlpumpen 7 im offenen Querschnitt eines Bypass-Triebwerkes sich eine wirtschaftliche Grenzschichtabsaugung umsetzen und eine effiziente Stoßgrenzschichtkontrolle erzielen läßt. Die jederzeit im "Cruise-Fall" durchgesetzten Luftmassen im Triebwerk 5 (je nach Typ: im Bypass cirka 150 kg/s bzw. im Core cirka 25 kg/s) enthalten kinetische Energien, die man mit der erfinderischen Lösung nutzbringend verwenden kann. Dabei werden nicht gänzlich auszuschließende Strömungsveriuste im offenen Querschnitt des Bypass-Triebwerkes oder ein ungünstiger Wirkungsgrad der Strahlpumpen 7 durch die Verwendung vorhandener Energie zur Erreichung aerodynamische Vorteile durch Grenzschichtabsaugung kompensiert. Gemessen an den triebwerksintern fließenden Massenströmen wird ein vergleichbar geringer Prozentsatz zur Grenzschichtabsaugung der Flügelvorderkante und -oberseite (etwa 1 kg/s Luft pro Triebwerk) benötigt. Ferner ist die Installation der Rohrleitungen für ein solches Absaugesystem vergleichbar einfach, da nur kurze Entfernungen (bspw. von den Absaugkammern der Tragfläche 111 zum jeweiligen Triebwerk 7) zu überbrücken sind. Ein weiterer großer Vorteil nach der vorgestellten Konfiguration ist die ausschließliche Verwendung von Bauelementen, die aufgrund fehlender beweglicher Teile praktisch wartungsfrei und nahezu ausfallsicher sind.

## Patentansprüche

1. **Anordnung zur Grenzschichtabsaugung und Stoßgrenzschichtkontrolle für ein Flugzeug,** mit einer Flugzeugstruktur (1), deren Außenhaut (2) an den strömungskritischen Stellen absaugbare Flächen (3) aufweist, denen man für die Laminarhaltung der Grenzschicht Luft der Grenzschichtströmung absaugt, und wenigstens einem luftatmenden Triebwerk (5), das mit geeigneten Mitteln an der Flugzeugstruktur (1) befestigt ist, **dadurch gekennzeichnet, dass** das Triebwerk (5) über eine Leitungsverbindung (4) mit einer der absaugbaren Flächen (3) verbunden ist und im offenen Querschnitt (6) des Triebwerkes (5) wenigstens eine Strahl-Pumpe (7) angeordnet ist, die durch einen im Triebwerk (5) umgesetzten Treibstrahl (8) der Luft angetrieben wird.

2. Anordnung nach Anspruch 1, **dadurch gekennzeichnet, daß** die Strahlpumpe (7) mit einer im offenen Querschnitt (6) des Triebwerkes (5) angeordneten Saugleitung (10) realisiert ist, die mit der Leitungsverbindung (4) verbunden ist.

3. Anordnung nach Anspruch 2, **dadurch gekennzeichnet, daß** die Saugleitung (10) ein frei gebogenes Biegeteil ist, das durch eine Wandung des Triebwerkgehäuses (12) geführt ist oder zumindestens mit einer dem Triebwerkgehäuse (12) eingelassenen Gehäuseöffnung (9) verbunden ist, dem einseitig und außerhalb des Triebwerkgehäuses (12) oder an der Gehäuseobertläche des Triebwerkgehäuses (12) einsetzend die Leitungsverbindung (4) angeschlossen ist, dessen Endbereich parallel einer Mittelachse (13) des Triebwerkes (5) liegt oder sich ihr zuwendet, dessen freies Ende in den offenen Querschnitt (6) des Triebwerkes (5) mündet.

4. Anordnung nach Anspruch 3, **dadurch gekennzeichnet, daß** die Saugleitung (10) ein winklig gebogenes Rohrbiegeteil ist.

5. Anordnung nach Anspruch 2, **dadurch gekennzeichnet, daß** die Saugleitung (10) mit einer der Strömungsrichtung des Treibstrahles (8) zugewandten Öffnung (14) versehen ist, der ein im Querschnitt der Saugleitung (10) angeordnetes Treibstrahlrohr (15) angeschlossen ist, das parallel der Strömungsrichtung des Strömungskanals liegt, dessen freies Ende in den offenen Querschnitt (6) des parallel der Mittelachse (13) des Triebwerkes (5) liegenden Endbereiches (101) der Saugleitung (10) gerührt ist.

6. Anordnung nach Anspruch 5, **dadurch gekennzeichnet, daß** das Treibstrahlrohr (15) ein in gerader Richtung verlaufendes Rohr ist.

7. Anordnung nach Anspruch 1, **dadurch gekennzeichnet, daß** mehrere Strahlpumpen (7), deren genauer Einbauort sich nach dem Aufbau des Triebwerkes (5) und nach der günstigsten Position für die anzuschließende Leitungsverbindung (4) richtet, im offenen Querschnitt (6) des Triebwerkes (5) angeordnet sind, deren Anzahl durch die insgesamt außerhalb der Außenhaut (2) abzusaugende Luftmenge, die sich in Korrelation der aus mehreren effektiv absaugbaren Flächen (3) zusammengesetzten effektiven Gesamtabsaugtläche befindet, vorbestimmt ist.

8. Anordnung nach Anspruch 7, **dadurch gekennzeichnet, daß** die Leitungsverbindung (4) einer Leitungsverzweigung angeschlossen ist, die sich inner- oder außerhalb des Triebwerkgehäuses (12) befindet, an der weitere Leitungsverbindungen abgezweigt sind, die im einzelnen den betreffenden Strahlpumpen (7) angeschlossen sind.

9. Anordnung nach Anspruch 7, **dadurch gekennzeichnet, daß** die Strahlpumpen (7) an einem vorbestimmten Einbauort, der den offenen Querschnitt (6) des Triebwerkes (5) quer zur Mittelachse (13) des Triebwerkes (5) umfaßt, installiert sind, innerhalb dem an einer vorbestimmten Position (C1, C2) entweder eine einzelne Strahlpumpe (7) angeordnet ist oder mehrere Strahlpumpen (7), die zueinander beabstandet angeordnet sind, vertreten sind.

10. Anordnung nach Anspruch 9, **dadurch gekennzeichnet, daß** die zueinander beabstandeten Strahlpumpen (7) paarweise angeordnet sind oder mit drei oder mit vier zueinander beabstandet angeordneten Strahlpumpen (7) vertreten sind.

11. Anordnung nach Anspruch 7, **dadurch gekennzeichnet, daß** ein im Triebwerk-Lufteirilaß (16) vor einem Triebwerkgebläse (17) befindlicher und / oder ein am Anfang und / oder am Ende eines den Neberduftstrom des Triebwerkes (5) führenden Bypaßkanals (18) befindlicher und / oder ein dem Triebwerkgebläse (17) folgender und den inneren Luftstrom führender Hauptstromkanal (19) an der Stelle vor oder nach einer Verdichterbaugruppe (20) und / oder vor oder nach einer Turbinenbaugruppe (23), die dem Hauptstromkanal (19) integriert sind, als realer Einbauort vorbestimmt ist.

## Claims

1. **Arrangement for the boundary layer suction and impact boundary layer control for an aircraft,** with an aircraft structure (1), the outer skin (2) of which comprises, at the flow-critical points, suction areas (3) from which air of the boundary layer flow is sucked for the laminarisation of the boundary layer, and at least one air-breathing power unit (5) which is fastened by suitable means to the aircraft structure (1), **characterised in that** the power unit (5) is connected via a line connection (4) to one of the suction areas (3), and at least one jet pump (7) is disposed in the open cross section (6) of the power unit (5), which pump is driven by a driving jet (8), moved in the power unit (5), of the air.

2. Arrangement according to Claim 1, **characterised in that** the jet pump (7) is constructed with a suction line (10) which is disposed in the open cross section (6) of the power unit (5) and is connected to the line connection (4).

3. Arrangement according to Claim 2, **characterised in that** the suction line (10) is a freely bent bending part which is passed through a wall of the power unit housing (12) or is at least connected to a housing opening (9) set into the power unit housing (12), to which part the line connection (4) is connected on one side and outside of the power unit housing (12) or by insertion at the housing surface of the power unit housing (12), the end region of which part lies parallel to a central axis (13) of the power unit (5) or faces it and the free end of which leads into the open cross section (6) of the power unit (5).

4. Arrangement according to Claim 3, **characterised in that** the suction line (10) is a bending pipe part which is bent at an angle.

5. Arrangement according to Claim 2, **characterised in that** the suction line (10) is provided with an opening (14) which faces the direction of flow of the driving jet (8) and to which a driving jet pipe (15) disposed in the cross section of the suction line (10) is connected, which pipe lies parallel to the direction of flow of the flow channel and the free end of which passes into the open cross section (6) of the end region (101), lying parallel to the central axis (13) of the power unit (5), of the suction line (10).

6. Arrangement according to Claim 5, **characterised in that** the driving jet pipe (15) is a pipe which extends in a straight direction.

7. Arrangement according to Claim 1, **characterised in that** a plurality of jet pumps (7), whose precise installation location is dependent on the structure of the power unit (5) and on the most favourable position for the line connection (4) which is to be connected, are disposed in the open cross section (6) of the power unit (5), the number of which pumps is predetermined by the air volume which is to be sucked off as a whole outside of the outer skin (2) and which is correlated with the total effective suction area composed of a plurality of areas (3) from which air can effectively be sucked.

8. Arrangement according to Claim 7, **characterised in that** the line connection (4) is connected to a branch line which is located inside or outside of the power unit housing (12) and at which further line connections are branched off, these being connected individually to the jet pumps (7) concerned.

9. Arrangement according to Claim 7, **characterised in that** the jet pumps (7) are installed at a predetermined installation location which comprises the open cross section (6) of the power unit (5) transversely to the central axis (13) of the power unit (5), within which either an individual jet pump (7) is disposed or a plurality of jet pumps (7), which are disposed in spaced fashion, are present at a predetermined position (C1, C2).

10. Arrangement according to Claim 9, **characterised in that** the spaced jet pumps (7) are disposed in pairs or are present as three or four spaced jet pumps (7).

11. Arrangement according to Claim 7, **characterised in that** a primary flow channel (19) located in the power unit air inlet (16) before a power unit fan (17) and/or a primary flow channel (19) located at the beginning and/or at the end of a bypass channel (18) carrying the secondary air flow of the power unit (5) and/or a primary flow channel (19) following the power unit fan (7) and carrying the inner air flow is/are predetermined as the real installation location at the point before or after a compressor assembly (20) and/or before or after a turbine assembly (23), which is/are integrated into the primary flow channel (19).

## Revendications

1. Dispositif d'aspiration de la couche limite et contrôle de la couche limite de jonction pour un avion comprenant une structure d'avion (1) dont le revêtement extérieur (2) présente, aux endroits critiques en termes d'écoulement, des surfaces (3) susceptibles d'être aspirées, dans lesquelles on aspire de l'air d'écoulement de couche limite pour assurer le maintien laminaire de la couche limite, et au moins un propulseur (5) aérobie qui est fixé avec des moyens appropriés à la structure d'avion (1), **caractérisé par le fait que** le propulseur (5) est relié via une conduite de liaison (4) à l'une des surfaces (3) susceptibles d'être aspirées et qu'il est prévu, dans la section ouverte (6) du propulseur (5), au moins une pompe à jet (7) qui est entraînée par un jet de propulsion (8) de l'air, converti dans le propulseur (5).

2. Dispositif selon la revendication 1, **caractérisé par le fait que** la pompe à jet (7) est réalisée avec une conduite d'aspiration (10) qui est installée dans la section ouverte (6) du propulseur (5) et est reliée à la conduite de liaison (4).

3. Dispositif selon la revendication 2, **caractérisé par le fait que** la conduite d'aspiration (10) est une pièce librement coudée qui traverse une paroi du carter (12) de propulseur ou est au moins reliée à une ouverture (9) de carter aménagée dans le carter de propulseur (12), à laquelle est raccordée la conduite de liaison (4), sur un côté et à l'extérieur du carter (12) de propulseur ou commençant à la surface du carter (12) de propulseur, dont la portion d'extrémité est parallèle à un axe médian (13) du propulseur (5) ou est tournée vers celui-ci et dont l'extrémité libre débouche dans la section ouverte (6) du propulseur (5).

4. Dispositif selon la revendication 3, **caractérisé par le fait que** la conduite d'aspiration (10) est une pièce tubulaire coudée angulaire.

5. Dispositif selon la revendication 2, **caractérisé par le fait que** la conduite d'aspiration (10) est pourvue d'une ouverture (14) qui est tournée vers la direction d'écoulement du jet de propulsion (8) et à laquelle est raccordé un tube à jet de propulsion (15) qui est disposé dans la section de la conduite d'aspiration (10) et est parallèle à la direction d'écoulement du conduit d'écoulement et dont l'extrémité libre est amenée dans la section ouverte (6) de la portion d'extrémité (101) de la conduite d'aspiration (10) qui est parallèle à l'axe médian (13) du propulseur (5).

6. Dispositif selon la revendication 5, **caractérisé par le fait que** le tube à jet de propulsion (15) est un tube s'étendant dans une direction rectiligne.

7. Dispositif selon la revendication 1, **caractérisé par le fait que** plusieurs pompes à jet (7), dont le lieu d'installation précis dépend de la structure du propulseur (5) et de la position la plus avantageuse pour la conduite de liaison (4) à raccorder, sont disposées dans la section ouverte (6) du propulseur (5), leur nombre étant prédéterminé par le volume d'air total qui doit être aspiré à l'extérieur du revêtement extérieur (2) et qui est en corrélation avec la surface d'aspiration totale effective, constituée de plusieurs surfaces (3) pouvant être effectivement aspirées.

8. Dispositif selon la revendication 7, **caractérisé par le fait que** la conduite de liaison (4) est raccordée à une ramification de conduite qui se trouve à l'intérieur ou à l'extérieur du carter (12) de propulseur et d'où partent d'autres conduites de liaison qui sont chacune raccordées aux pompes à jet (7) respectives.

9. Dispositif selon la revendication 7, **caractérisé par le fait que** les pompes à jet (7) sont installées dans un lieu de montage prédéterminé qui englobe la section ouverte (6) du propulseur (5), perpendiculairement à l'axe médian (13) du propulseur (5), et à l'intérieur duquel il est prévu, à un emplacement prédéfini (C1, C2), soit une pompe à jet (7) individuelle, soit plusieurs pompes à jet (7) qui sont espacées les unes des autres.

10. Dispositif selon la revendication 9, **caractérisé par le fait que** les pompes à jet (7) espacées les unes des autres sont disposées par paires ou sont prévues avec trois ou quatre pompes à jet (7) espacées les unes des autres.

11. Dispositif selon la revendication 7, **caractérisé par le fait qu'**un conduit de flux principal (19), situé dans l'entrée d'air (16) de propulseur, en amont d'une soufflante (17) de propulseur, et/ou situé au début et/ou à la fin d'un conduit de dérivation (18) guidant le flux d'air additionnel du propulseur (5) et/ou situé en aval de la soufflante (17) de propulseur et guidant le flux d'air intérieur, est prédéterminé comme lieu de montage réel, à l'endroit situé en amont ou en aval d'un groupe compresseur (20) et/ou en amont ou en aval d'un groupe de turbine (23) qui sont intégrés dans le conduit de flux principal (19).
